**Europäisches Patentamt**

**European Patent Office**

(19) **Office européen des brevets**

(11) Veröffentlichungsnummer : **0 476 075 B1**

## (12) EUROPÄISCHE PATENTSCHRIFT

(45) Veröffentlichungstag der Patentschrift :
**02.11.95 Patentblatt 95/44**

(51) Int. Cl.$^6$ : **G01D 5/22**

(21) Anmeldenummer : **91904004.8**

(22) Anmeldetag : **28.02.91**

(86) Internationale Anmeldenummer :
**PCT/DE91/00177**

(87) Internationale Veröffentlichungsnummer :
**WO 91/15735 17.10.91 Gazette 91/24**

(54) **AUSWERTESCHALTUNG FÜR EINEN DIFFERENTIALDROSSEL-WEGGEBER UND ANWENDUNG EINER SOLCHEN SCHALTUNG.**

(30) Priorität : **04.04.90 DE 4010772**

(43) Veröffentlichungstag der Anmeldung :
**25.03.92 Patentblatt 92/13**

(45) Bekanntmachung des Hinweises auf die
Patenterteilung :
**02.11.95 Patentblatt 95/44**

(84) Benannte Vertragsstaaten :
**DE FR GB**

(56) Entgegenhaltungen :
**WO-A-89/11105**
**DE-B- 2 614 778**

(73) Patentinhaber : **ROBERT BOSCH GMBH**
**Postfach 30 02 20**
**D-70442 Stuttgart (DE)**

(72) Erfinder : **LOCHER, Johannes**
**Moevenweg 50**
**D-7000 Stuttgart 50 (DE)**
Erfinder : **FISCHER, Werner**
**Dickenbergstrasse 9/1**
**D-7258 Heimsheim (DE)**
Erfinder : **BARTH, Joerg**
**Merowingerstrasse 10**
**D-7130 Muehlacker-Lienzingen (DE)**

## Beschreibung

Die Erfindung betrifft eine Auswerteschaltung für einen Differentialdrossel-Weggeber, d. h. eine Schaltung, die eine Meßspannung ausgibt, die ein Maß für den Verstellweg der Verstellstange ist, mit der ein solcher Weggeber ausgestattet ist. Die Erfindung betrifft weiterhin eine Anwendung einer solchen Schaltung, konkret die Art des Anschlusses eines Differentialdrossel-Weggebers an eine solche Auswerteschaltung.

Stand der Technik

Eine Auswerteschaltung, die zusammen mit verschiedenen üblichen Weggebern einsetzbar ist, ist in einem Artikel mit dem Titel "Using the NE 5521 Signal Conditioner in Multi-Faceted Applications" von Z. Rahim, beschrieben in Valvo-Datenbuch 1988, Professionelle integrierte Analog- und Spezialschaltungen, Dr. Alfred Hüttig Verlag, Heidelberg, Seiten 818 und 819. Es handelt sich um eine Schaltung mit einem Meßprinzip, wie es vielfach eingesetzt wird. Es wird nämlich eine sinusförmige Spannung an den Geber, z. B. einen Differentialdrossel-Weggeber angelegt und die Induktionsspannung wird ausgewertet, was durch phasengekoppeltes Gleichrichten und Glätten des gleichgerichteten induzierten Sinussignals erfolgt. Problematisch bei Schaltungen mit diesem bekannten Prinzip ist, daß erheblicher Schaltungsaufwand beim Glätten des Meßsignales zu betreiben ist, damit sich dieses ohne zu große Restwelligkeit proportional mit dem Verstellweg der Verstellstange des Gebers ändert.

Eine Auswerteschaltung, die nach einem anderen Prinzip arbeitet, ist für die Anwendung mit einem Halbdifferential-Kurzschlußring-Weggeber in WO-A-89/11105 beschrieben. Es handelt sich um eine Schaltung, bei der an einen ersten Ausgangsanschluß eine Wechselspannung konstanter Amplitude und fester Frequenz und an den anderen Ausgangsanschluß eine Wechselspannung gleicher Frequenz aber variabler Amplitude gelegt wird. Die einstellbare Amplitude wird so lange verändert, bis die am Mittelabgriff des Gebers abgegriffene Spannung Null ist. Der Wert der variablen Amplitude, wie sie bei der dieser Abgleichbedingung vorliegt, ist unmittelbar ein Maß für den am Geber eingestellten Weg. Der Wert der Amplitude ist wiederum direkt proportional zum Wert einer Steuerspannung, mit der die Amplitude eingestellt wird. Dies bedeutet, daß auch die Steuerspannung direkt proportional zum Verstellweg ist. Da die Steuerspannung eine Gleichspannung ist, liegt eine Meßspannung ohne jegliche Welligkeit vor, und zwar ohne daß aufwendige Glättungsmaßnahmen zu ergreifen wären.

Ein Differentialdrossel-Weggeber verfügt ebenso wie ein Halbdifferential-Kurzschlußring-Weggeber über zwei Endanschlüsse und einen Mittelanschluß. Würde man jedoch einen Differentialdrossel-Weggeber in gleicher Weise an die aus der genannten europäischen Schrift bekannte Auswerteschaltung anschließen wie den Halbdifferential-Kurzschlußring-Weggeber, würde sich die Meßspannung stark nichtlinear mit dem Verstellweg der Verstellstange des Gebers ändern. Soll auch bei angeschlossenem Differentialdrossel-Weggeber ein Meßsignal erhalten werden, das sich linear mit dem Verstellweg ändert, muß ein Anschließen über ein Widerstandsnetzwerk unter Zuhilfenahme einer Gleichspannungsquelle erfolgen. Wie ein solches Anschließen erfolgen kann, ist in der WO-A-91/02985 beschrieben (Art. 54(3,4) EPÜ).

In der genannten Druckschrift werden Auswerteschaltungen beschrieben, bei denen einem Differentialdrossel-Weggeber an einem Anschluß eine erste Wechselspannung mit konstanter Frequenz und konstanter Amplitude zugeführt wird, während an einen zweiten Anschluß eine zweite Wechselspannung mit gleicher Frequenz und 180° Phasenverschiebung angelegt wird, deren Amplitude veränderbar ist.

Weiterhin wird ein Eingangssignal zugeführt, das über einen phasengesteuerten Gleichrichter zuvor gleichgerichtet wird. In einer Vergleichseinrichtung wird das Ausgangssignal des Gleichrichters als Istwertsignal verwendet. Dieses wird mit einem Sollwertsignal zur Bildung einer Regelabweichung verglichen. Ausgehend vom integrierten Regelabweichungssignal wird die Amplitude des zweiten Oszillatorsignals beeinflußt.

Die bekannten Schaltungsanordnungen sind in ihrer Linearität, also im Zusammenhang zwischen Verstellweg und Ausgangsspannung noch etwas nicht linear, dabei wäre gerade ein linearer Zusammenhang wünschenswert.

Aus der DE-B-26 14 778 ist eine Auswerteschaltung für einen induktiven Wegaufnehmer bekannt, bei der die Geberanordnung aus zwei Induktionsspulen besteht, die in Reihe geschaltet sind und an einer Wechselspannung liegen. Die Induktivitäten ändern sich gegensinnig in Abhängigkeit von der Meßgröße. Die erhaltenen Ausgangsspannungen werden mit Hilfe eines Präzisions-Gleichrichters gleichgerichtet, sie dienen als Maß für den zu ermittelnden Meßwert.

Angesichts der geschilderten Probleme bestand unverändert der Wunsch, eine Auswerteschaltung für einen Differentialdrossel-Weggeber zur Verfügung zu haben, die ein Meßsignal ohne Restwelligkeit liefert, das sich ohne Kennlinienverfälschung proportional mit dem Verstellweg der Verstellstange eines solchen Gebers ändert. Außerdem bestand die Aufgabe, anzugeben, wie ein Differentialdrossel-Weggeber zusammen mit einer solchen Schaltung angewendet werden kann.

## Darstellung der Erfindung

Die erfindungsgemäße Auswerteschaltung für einen Differentialdrossel-Weggeber ist in Anspruch 1 gekennzeichnet.

Diese Auswerteschaltung unterscheidet sich von derjenigen, wie sie in WO-A-89/11105 beschrieben ist, dadurch, daß das erste Oszillatormittel keine Wechselspannung konstanter Amplitude ausgibt, sondern solcher Amplitude, daß die Summen der Amplituden der an den beiden Ausgangsanschlüssen anstehenden Wechselspannungen konstant bleibt.

Die eben genannte Änderung ermöglicht es, einen Differentialdrossel-Weggeber ohne Widerstandsnetzwerk und ohne Gleichspannungsversorgung unmittelbar an die Auswerteschaltung anzuschließen, und zwar so, daß

- der Mittelanschluß zwischen den beiden Spulen des Gebers mit dem Eingangsanschluß verbunden wird,
- und jeweils einer der beiden Endanschlüsse des Gebers mit einem Ausgangsanschluß verbunden wird,
- wodurch die Amplitude einer beliebigen der beiden Ausgangsspannungen ein proportionales Maß für den Verstellweg ist.

Von Vorteil ist es bei der eben genannten Anwendung, die Amplitude derjenigen der beiden Ausgangsspannungen als Maß für den Verstellweg zu verwenden, die sich mit Erhöhen des Verstellwegs erhöht. In diesem Fall wird ein direkt proportionaler Zusammenhang erhalten, während beim Verwenden der Amplitude der anderen Ausgangsspannung ein umgekehrt proportionaler Zusammenhang erhalten wird, was für die weitere Auswertung in der Regel ungünstiger ist als der unmittelbar proportionale Zusammenhang.

Dadurch, daß die Amplitude der Wechselspannungen direkt über den Gleichspannungs-Stellwert vom Integrator abhängt, liefert die Schaltung als Maß für den Verstellweg eine Gleichspannung ohne jede Welligkeit. Im eingeschwungenen Zustand weist die Spannung am Eingangsanschluß den Wert Null auf, weswegen sich parasitäre Kapazitäten gegen Masse nicht auf den Kennlinienverlauf auswirken.

Die erfindungsgemäße Auswerteschaltung ermöglicht also einfaches Anschließen eines Differentialdrossel-Weggebers und liefert ein Gleichspannungssignal ohne Welligkeit, dessen Spannungswert sich ohne Kennlinienverfälschung proportional mit dem Verstellweg der Verstellstange des Gebers ändert.

Um Regelschwingungen in der Auswerteschaltung so weit wie möglich zu unterbinden, ist es von Vorteil, eine Regelschaltung im ersten Oszillatormittel zu verwenden, die die Amplitude der von diesem Oszillatormittel ausgegebenen Wechselspannung auf denjenigen Wert regelt, der von dem Sollwert vorgegeben wird, wie er vom Integrator hinter dem Eingangsanschluß ausgegeben wird.

## Zeichnung

Fig. 1 Blockschaltbild einer Auswerteschaltung für einen Differentialdrossel-Weggeber mit angeschlossenem Geber;

Fig. 2a - c drei Reihen von jeweils vier zeitkorrelierten Signalen, wie sie in der Schaltung gemäß Fig. 1 auftreten, in Abhängigkeit von Amplitude und Phase eines Eingangssignals; und

Fig. 3 Blockschaltbild für ein erstes Oszillatormittel, wie es in der Schaltung gemäß Fig. 1 verwendet wird, ergänzt um eine Amplituden-Regelschaltung.

## Beschreibung von Ausführungsbeispielen

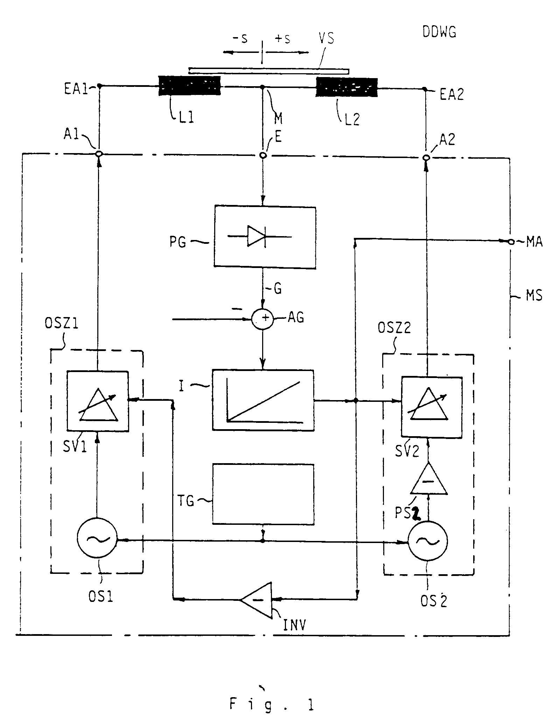

Die in Fig. 1 dargestellte und durch eine strichpunktierte Linie eingeschlossene Auswerteschaltung MS weist einen ersten Ausgangsanschluß A1, einen zweiten Ausgangsanschluß A2, einen Meßanschluß MA und einen Eingangsanschluß E auf. Der erste Ausgangsanschluß A1 erhält von einem ersten Oszillatormittel OSZ1 eine sinusförmige Wechselspannung konstanter Frequenz aber variabler Amplitude. Bei den Ausführungsbeispielen beträgt die Frequenz 10 kHz und die Spitze-Spitze-Amplitude maximal 4 V. Diese Frequenz wird von einem Taktgenerator TG vorgegeben, der auch ein zweites Oszillatormittel OSZ2 ansteuert, das eine sinusförmige Wechselspannung ebenfalls variabler Amplitude an den zweiten Ausgangsanschluß A2 ausgibt. Die Frequenz dieser Schwingung stimmt mit der am ersten Ausgangsanschluß A1 überein, ist jedoch um 180° gegenüber dieser phasenverschoben.

Ausgehend vom Signal vom Taktgenerator TG werden die Schwingungen in den beiden Oszillatormitteln OSZ1 und OSZ2 durch Oszillatoren OS1 bzw. OS2 erzeugt. Im zweiten Oszillatormittel OSZ2 folgt auf den Oszillator OS2 ein phasenschiebender Inverter PS2 mit einem anschließenden steuerbaren Verstärker SV2. Im ersten Oszillatormittel OSZ1 schließt sich ein steuerbarer Verstärker SV1 direkt an den Oszillator OS1 an.

Statt dem eben beschriebenen Aufbau der Oszillatormittel könnte auch ein solcher verwendet werden, bei dem nur ein einziger Oszillator verwendet wird. Auch könnte der phasenschiebende Inverter PS2 weggelassen werden, wenn die zwei Oszillatoren OS1 und OS2 so vom Signal vom Taktgenerator RG angeregt würden, daß sie gegenphasig schwingen. Es ist jedoch vorteilhafter, den phasenschiebenden Inverter PS2 zu verwenden, da dann eventuelle kleine Phasenfehler, die ein Abweichen von der genauen Phaseninvertierung erforderlich machen, korrigiert werden können.

Die steuerbaren Verstärker SV1 und SV2 werden von einem Signal gesteuert, das vom Eingangssignal abgeleitet wird, wie es am Eingangsanschluß E abgegriffen wird. In der praktischen Anwendung der Schaltung ist dies ein Wechselspannungssignal mit derselben Signalform und derselben Frequenz, wie sie die Ausgangssignale aufweisen. Das Eingangssignal wird in einem phasengesteuerten Gleichrichter PG unter Berücksichtigung der Phasenlage zum ersten Ausgangssignal gleichgerichtet. Das gleichgerichtete Signal G wird einem Addierglied AG als Istwert für die genannte Amplitudenregelung zugeführt. Dort wird vom Istwert ein vorgegebener Sollwert abgezogen, um ein Regelabweichungssignal zu erhalten. Dieses wird in einem Integrator I integriert, dessen Ausgangssignal das Stellsignal für den zweiten gesteuerten Verstärker SV2 ist. Dieses Stellsignal wird zugleich an den Meßanschluß MA gegeben. Außerdem wird es von einem Inverter INV invertiert. Das invertierte Signal steuert den ersten steuerbaren Verstärker SV1.

Wie bereits oben angegeben, beträgt die maximale Spitze-Spitze-Amplitude der Wechselspannungssignale beim Ausführungsbeispiel 4 V. Dieser Wert wird bei einer Integrationsspannung von 5 V ausgegeben. Bei 0 V Integrationsspannung hat die Spitze-Spitze-Amplitude den Wert Null. Bei 2,5 V Integrationsspannung ist die Spitze-Spitze-Amplitude 2 V. Dieser Zusammenhang ermöglicht es, mit Ansteuerspannungen der logischen Bauteile von 0 V und + 5 V auszukommen. Der Inverter INV invertiert in diesem Fall an der mittleren Spannung, also der Bezugsspannung von 2,5 V. Beträgt demgemäß die Integrationsspannung 3 V (2,5 V + 0,5 V), wird der zweite steuerbare Verstärker SV2 mit dieser Spannung angesteuert, während der erste steuerbare Verstärker SV1 mit 2 V (2,5 V - 0,5 V) angesteuert wird.

An die Auswerteschaltung MS gemäß Fig. 1 ist ein Differentialdrossel-Weggeber DDWG angeschlossen. Dabei sind seine Endanschlüsse EA1 und EA2 mit den Ausgangsanschlüssen A1 bzw. A2 verbunden. Sein Mittelanschluß M ist auf den Eingangsanschluß E geführt. Der Differentialdrossel-Weggeber DDWG verfügt über zwei Wicklungen mit Induktivitätswerten L1 und L2. Steht eine Verstellstange VS symmetrisch zu den beiden Wicklungen, sind die Induktivitätswerte gleich. Wird die Verstellstange VS um einen Weg s in Richtung zur ersten Wicklung verschoben, nimmt deren Induktivitätswert L1 zu. Hierbei gilt:

$$L2 = k1 \times s \quad (1)$$
$$L1 + L2 = k2 \quad (2)$$

wobei k1 und k2 Konstanten sind.

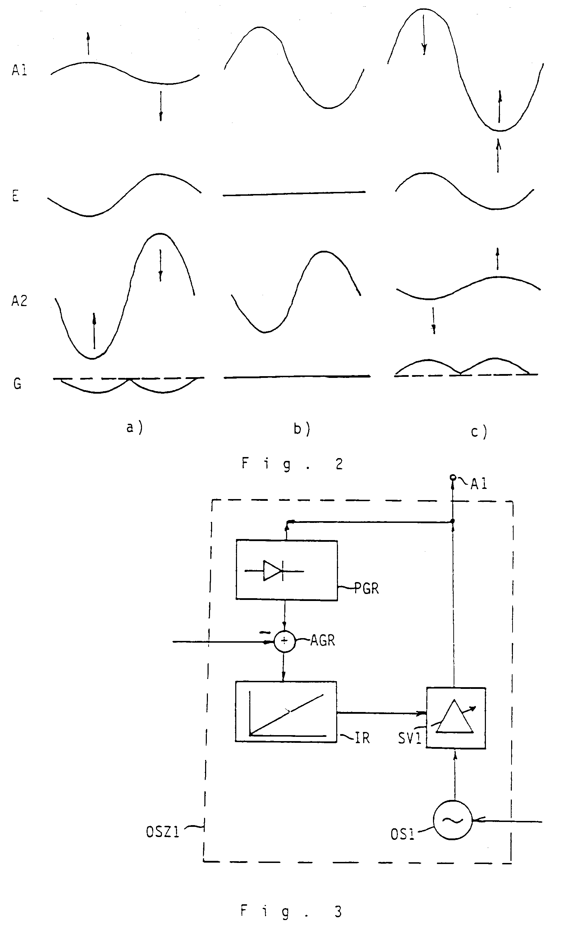

Die Funktion der Auswerteschaltung MS gemäß Fig. 1 mit dem in der beschriebenen Weise angeschlossenen Differentialdrossel-Weggeber DDWG wird im folgenden anhand von Fig. 2 näher erläutert.

Am Eingangsanschluß E mögen, entsprechend den Fig. 2a - 2c, zu unterschiedlichen Zeitpunkten unterschiedliche Eingangssignale liegen, nämlich gemäß Fig. 2a ein solches, das gegenphasig zum ersten Ausgangssignal ist, dann eines mit konstantem Nullpegel (Fig. 2b) und schließlich ein solches, das in Phase mit dem ersten Ausgangssignal schwingt. Am zweiten Ausgangsanschluß A2 wird jeweils das dort anstehende zweite Ausgangssignal gemessen. Dieses ist immer gegenphasig zum ersten Ausgangssignal. Im Fall des gegenphasigen Eingangssignals, bezogen auf das erste Ausgangssignal, wird die Amplitude des zweiten Ausgangssignales aufgrund der Wirkung des Integrators I immer kleiner, während die Amplitude des ersten Ausgangssignals immer größer wird, was in Fig. 2a durch entsprechende Pfeile angedeutet ist. Im Fall des konstanten Eingangssignals bleiben die Amplituden beider Ausgangssignale unverändert (Fig. 2b), da dann der Integrationswert auf einem festen Wert stehenbleibt. Im Fall des gleichphasigen Eingangssignales wächst die Amplitude des zweiten Ausgangssignales aufgrund der Wirkung des Integrators I, während die Amplitude des ersten Ausgangssignales kleiner wird, was in Fig. 2c durch entsprechende Pfeile dargestellt ist.

Die Amplituden der beiden Ausgangssignale werden also so lange verstellt, bis die Spannung am Eingangsanschluß dauernd Null ist. Aufgrund des beschriebenen Aufbaus der Schaltung gilt dabei folgende Gleichung für die Amplitudenwerte:

$$\hat{V}1 + \hat{V}2 = k3 \quad (3)$$

Aufgrund der Bedingungen der Gleichungen (2) und (3) gilt im Abgleichsfall:

$$\hat{V}1 : L1 = \hat{V}2 : L2 = k4 \quad (4)$$

Aus den Gleichungen (1) und (4) folgt:

$$\hat{V}2/k4 = k1 \times s$$

oder

$$\hat{V}2 \sim s \quad (5)$$

Die Amplitude $\hat{V}2$ des zweiten Ausgangssignales hängt wie folgt von der am Meßanschluß MA abgreifbaren Meßspannung V_MA ab, wie sie vom Integrator I ausgegeben wird:

$$\hat{V}2 = k5 \times V\_MA \quad (6)$$

Aus den Gleichungen (5) und (6) folgt:

$$V\_MA \sim s \quad (7)$$

Wie ersichtlich, ändert sich die am Meßanschluß MA ausgegebene Spannung V_MA unter den durch die Schaltung realisierten Bedingungen proportional mit dem Verstellweg s der Verstellstange VS.

Was Details der Schaltung gemäß Fig. 1 anbetrifft, wird auf die Schaltung gemäß Fig. 2 der vorgenannten WO-A-89/11105 verwiesen. Dort ist auch angegeben, daß der vom Integrator I gebildete Wert vorzugsweise über eine Abtast/ Halte-Schaltung ausgegeben wird, um dadurch Regelschwingungen entgegenzuwirken. Gegen Regelschwingungen kann bei der Schaltung gemäß Fig. 1 noch weiteres unternommen werden. Vorteilhafterweise wird nämlich die Amplitude des vom ersten Oszillatormittel OSZ1 ausgegebenen Signals geregelt, wie dies durch Fig. 1 veranschaulicht ist. Hier wird der erste steuerbare Verstärker SV1 nicht unmittelbar von dem vom Inverter INV ausgegebenen Signal angesteuert, sondern dieses Signal dient als Sollwert, der in einem Additionsglied AGR von einem Istwertsignal abgezogen wird, das mit Hilfe eines phasengekoppelten Gleichrichters PGR aus dem Ausgangssignal vom ersten steuerbaren Verstärker SV1 gebildet wird. Das vom Additionsglied AGR gebildete Regelabweichungssignal wird von einem Integrator IR integriert. Erst mit dem integrierten Signal wird der erste steuerbare Verstärker SV1 gesteuert.

**Patentansprüche**

1. Auswerteschaltung für einen Differentialdrossel-Weggeber, mit
   - einem ersten Ausgangsanschluß (A1),
   - einem ersten Oszillatormittel (OSZ1), das eine erste Wechselspannung an den ersten Ausgangsanschluß (A1) gibt, welche erste Wechselspannung konstante Frequenz aufweist und durch ein erstes Amplitudeneinstellmittel in der Amplitude veränderbar einstellbar ist,
   - einem zweiten Ausgangsanschluß (A2),
   - einem zweiten Oszillatormittel (OSZ2), das eine zweite Wechselspannung an den zweiten Ausgangsanschluß (A2) gibt, welche zweite Wechselspannung dieselbe Frequenz aufweist wie die erste Wechselspannung, gegenüber dieser um 180° phasenverschoben ist und durch ein zweites Amplitudeneinstellmittel in der Amplitude einstellbar ist,
   - einem Eingangsanschluß (E) zum Zuführen eines Eingangssignales,
   - einem phasengesteuerten Gleichrichter (PG), der mit dem Eingangsanschluß verbunden ist, zum Gleichrichten des Wechselspannungsanteils im Eingangssignal,
   - einer Vergleichseinrichtung (AG), die mit dem Gleichrichter verbunden ist, und dessen Ausgangssignal als Istwertsignal erhält und dieses mit einem Sollwertsignal zum Bilden eines Regelabweichungssignales vergleicht, und
   - einem Integrator (I), der mit der Vergleichseinrichtung verbunden ist, um das Regelabweichungssignal zu integrieren, und der das integrierte Signal als Amplitudeneinstellsignal an die Amplitudeneinstellmittel der beiden Oszillatormittel so ausgibt, daß sich die Amplitude der Spannung am einen Ausgangsanschluß genau jeweils um denjenigen Wert erhöht, um den sich die Amplitude der Spannung am anderen Ausgangsanschluß erniedrigt, so daß also die Summe der Amplituden konstant bleibt.

2. Auswerteschaltung nach Anspruch 1, gekennzeichnet durch einen Meß-Ausgangsanschluß (MA), der mit dem Ausgang des Integrators (I) verbunden ist.

3. Auswerteschaltung nach einem der Ansprüche 1 oder 2, gekennzeichnet durch eine Regelungsschaltung (PGR, AGR, IR) zum Regeln der Amplitude der Wechselspannung vom ersten Oszillatormittel (OSZ1).

4. Anwendung der Auswerteschaltung nach einem der Ansprüche 1 - 3, dadurch gekennzeichnet, daß zum Messen des Verstellwegs (s) der Verstellstange (VS) eines Differentialdrossel-Weggebers (DDWG)
   - der Mittelanschluß (M) zwischen den beiden Wicklungen (Induktivitäten L1, L2) des Gebers mit dem Eingang (E) der Schaltung verbunden wird,
   - und jeweils einer der beiden Endanschlüsse (EA1, EA2) des Gebers mit einem der Ausgangsanschlüsse (A1, A2) der Schaltung verbunden wird,
   - wodurch die Amplitude einer beliebigen der beiden Ausgangsspannungen ein proportionales Maß für den Verstellweg ist.

**Claims**

1. Evaluation circuit for a differential inductor displacement sensor, having
   - a first output connection (A1),
   - a first oscillator means (OSZ1), which produces a first AC voltage across the first output connection (A1), which first AC voltage has a constant frequency and the amplitude of which can be variably adjusted by a first amplitude adjusting means,
   - a second output connection (A2),
   - a second oscillator means (OSZ2), which produces a second AC voltage across the second output connection (A2), which second AC voltage has the same frequency as the first AC voltage, is phase-shifted by 180° with respect to the latter and the amplitude of which can be adjusted by a second amplitude adjusting means,
   - an input connection (E) for supplying an input signal,
   - a phase-controlled rectifier (PG), which is connected to the input connection, for rectifying the AC voltage component in the input signal,

- a comparator (AG), which is connected to the rectifier, receives the output signal thereof as an actual value signal and compares the latter with a desired value signal for the purpose of forming a control error signal, and

- an integrator (I), which is connected to the comparator in order to integrate the control error signal, and which outputs the integrated signal as an amplitude adjusting signal to the amplitude adjusting means of the two oscillator means in such a way that the amplitude of the voltage across one output connection is increased by exactly that value in each case by which the amplitude of the voltage across the other output connection is reduced, with the result that the sum of the amplitudes therefore remains constant.

2. Evaluation circuit according to Claim 1, characterized by a measurement output connection (MA), which is connected to the output of the integrator (I).

3. Evaluation circuit according to one of Claims 1 and 2, characterized by a control loop (PGR, AGR, IR) for controlling the amplitude of the AC voltage from the first oscillator means (OSZ1).

4. Use of the evaluation circuit according to one of Claims 1 - 3, characterized in that, for the measurement of the adjustment displacement (s) of the adjusting rod (VS) of a differential inductor displacement sensor (DDWG),

- the centre connection (M) between the two windings (inductances L1, L2) of the sensor is connected to the input (E) of the circuit,

- and one of the two end connections (EA1, EA2) of the sensor is respectively connected to one of the output connections (A1, A2) of the circuit,

- as a result of which the amplitude of an arbitrary output voltage of the two output voltages is a proportional measure of the adjustment displacement.

## Revendications

1. Circuit d'exploitation pour un capteur de position d'un organe d'étranglement différentiel, avec :
   - un premier raccord de sortie (A1),
   - un premier système d'oscillateur (OSZ1) qui délivre une première tension alternative au premier raccord de sortie (A1) qui présente une première tension alternative à fréquence constante et peut être réglé par un premier moyen de réglage variable en amplitude,
   - un deuxième raccord de sortie (A2),
   - un deuxième système d'oscillateur (OSZ2) qui délivre une seconde tension alternative au deuxième raccord de sortie (A2) qui présente une deuxième tension alternative à la même fréquence que la première tension alternative mais déphasée de 180° par rapport à celle-ci, et peut être réglé en amplitude par un second moyen de réglage en amplitude,
   - un raccord d'entrée (E) servant à amener un signal d'entrée,
   - un redresseur (PG) commandé en phase, qui est relié au raccord d'entrée pour redresser la fraction de la tension alternative dans le signal d'entrée,
   - un système de comparaison (AG) qui est relié au redresseur et dont le signal de sortie reçoit le signal en tant que signal de valeur réelle et compare celui-ci à un signal de consigne pour former un signal d'écart de réglage, et
   - un intégrateur (I) qui est relié au système de comparaison pour intégrer le signal d'écart de réglage, et qui délivre le signal intégré en tant que signal de réglage d'amplitude au moyen de réglage d'amplitude des deux systèmes d'oscillateur, de telle sorte que l'amplitude de la tension s'élève, sur un raccord de sortie, exactement de la valeur dont s'abaisse l'amplitude de la tension sur l'autre raccord de sortie, si bien que la somme des amplitudes reste donc constante.

2. Circuit d'exploitation selon la revendication 1, caractérisé par un raccord de sortie de mesure (MA) qui est relié à la sortie de l'intégrateur (I).

3. Circuit d'exploitation selon l'une des revendications 1 ou 2, caractérisé par un système de régulation (PGR, AGR, IR) qui sert à régler l'amplitude de la tension alternative du premier système d'oscillateur (OSZ1).

4. Utilisation du circuit d'exploitation selon l'une des revendications précédentes 1 à 3, caractérisé en ce que, pour mesurer la distance de déplacement (s) de la tige de réglage (VS) d'un capteur de position d'un organe d'étranglement différentiel (DDWG) :
   - le raccord du milieu (M) entre les deux enroulements (Inductances L1, L2) du capteur est relié à l'entrée (E) du circuit,
   - et respectivement l'un des deux raccords terminaux (EA1, EA2) du capteur est relié à l'un des raccords de sortie (A1, A2) du circuit,
- grâce à quoi l'amplitude de n'importe laquelle des tensions de sortie est une mesure proportionnelle du trajet de réglage.

F i g . 1

A1

E

A2

G

a)             b)             c)

F i g .  2

~A1

PGR

~
+ ~AGR

IR   SV1

OSZ1

OS1

F i g .  3

9